# DEMANDE DE BREVET EUROPEEN

(11) **EP 1 927 522 A2**
(43) Date de publication de la demande: **04.06.2008**
(21) Numéro de dépôt: 07301594.3
(22) Date de dépôt: 27.11.2007
(51) Int. Cl.: B60T 8/58, G01P 15/08, G01P 15/16

(54) **procédé et dispositif d'éstimation de l'acceleration longitudinale d'un vehicule automobile**

(30) Priorité: 30.11.2006 WO PCT/FR2006/055211
(71) Demandeur: PEUGEOT CITROËN AUTOMOBILES S.A., 78140 Vélizy Villacoublay (FR)
(72) Inventeur: FRADIN, Loïc, 94240, L'HAY LES ROSES (FR)

(57) **Abrégé**

L'invention concerne un procédé d'estimation de l'accélération longitudinale d'un véhicule automobile. Un premier signal comportant une information représentant la projection longitudinale de l'accélération totale (y compris l'accélération gravitationnelle) à laquelle le véhicule est soumis, et un deuxième signal comportant une information représentant la vitesse du véhicule sont reçus. Un cinquième signal comportant une information représentant l'accélération du véhicule est calculé à partir du deuxième signal. Un quatrième signal est calculé à partir du premier signal de manière à compenser les décalages temporels entre d'une part l'information comprise dans le premier signal et l'information comprise dans le cinquième signal. Un sixième signal est obtenu en soustrayant à l'information comprise dans le quatrième signal l'information comprise dans le cinquième signal. Un septième signal est obtenu en soustrayant à l'information comprise dans le sixième signal l'information comprise dans le premier signal. Le septième signal ainsi obtenu comprend l'information représentant l'accélération longitudinale du véhicule. L'invention a encore pour objet un dispositif d'estimation de l'accélération longitudinale d'un véhicule automobile.

En particulier, l'invention s'applique aux véhicules automobiles comportant des dispositifs mettant en oeuvre des fonctions nécessitant avec une dynamique importante la connaissance de l'accélération longitudinale du véhicule.

## Description

L'invention concerne un procédé et un dispositif d'estimation de l'accélération longitudinale d'un véhicule automobile. En particulier, l'invention s'applique aux véhicules automobiles comportant des dispositifs mettant en oeuvre des fonctions nécessitant la connaissance de l'accélération longitudinale du véhicule.

Les véhicules automobiles peuvent comporter un ensemble de fonctions d'assistance au conducteur, interagissant au niveau du contrôle et de la commande de la chaîne de traction. Certaines fonctions d'assistance utilisent des informations relatives à l'accélération longitudinale du véhicule. A titre d'exemple non limitatif, les fonctions de régulation de vitesse du véhicule, les fonctions de limitation de vitesse du véhicule, les fonctions d'aide à la manoeuvre à basse vitesse du véhicule utilisent de telles informations, soit parce que ces informations sont nécessaires à leur mise en oeuvre, soit parce que ces informations permettent d'améliorer leur comportement.

L'information d'accélération longitudinale est fournie sur un bus de communication reliant les différents calculateurs embarqués dans le véhicule, notamment un calculateur de freinage. Ce bus de données peut être par exemple un bus de type Controller Area Network (CAN) selon l'expression anglo-saxonne. L'information d'accélération longitudinale est généralement mise à disposition sur le bus de données par le calculateur du système de freinage lorsqu'il s'agit de système de freinage de type antiblocage (ou selon l'expression anglo-saxonne Anti-Blocking System ABS) ou de type contrôle de la stabilité (ou selon l'expression anglo-saxonne Electronic Stability Program ESP). Cependant, l'information d'accélération longitudinale telle que fournie par le système de freinage est bien trop discrétisée (la fréquence d'échantillonnage étant insuffisante) pour être utilisable dans la plupart des fonctions d'assistance au conducteur.

Pour répondre à cette inadaptation, il est connu de recalculer l'accélération longitudinale du véhicule à partir d'une information de vitesse du véhicule mise à disposition sur le bus de données par le calculateur du système de freinage. Le calculateur du système de freinage utilise pour cela les données provenant de capteurs disposés au niveau des roues. Ces capteurs fournissent des données (en général des signaux émis lorsque la roue a effectué une rotation d'un angle donné) permettant d'évaluer la vitesse de rotation de chaque roue et in fine la distance parcourue par le véhicule. L'information d'accélération longitudinale est alors sensiblement obtenue par dérivation de l'information de vitesse, elle-même obtenue par dérivation de l'information distance parcourue.

L'information d'accélération longitudinale ainsi obtenue souffre de plusieurs défauts.
L'information d'accélération longitudinale ainsi obtenue n'est pas suffisamment dynamique. En effet, l'information de vitesse disponible issue des capteurs disposés au niveau des roues est fortement filtrée puis discrétisée temporellement, de part notamment de la technologie employée pour la réalisation de tels capteurs (généralement une roue dentée et des capteurs permettant de détecter et comptabiliser le passage d'une dent). En outre, lors de l'opération de dérivation numérique de l'information de vitesse, les signaux discrétisés doivent être filtrés ce qui introduit un temps de retard.
L'information d'accélération longitudinale ainsi obtenue est indisponible à très basse vitesse, c'est-à-dire lorsque la vitesse du véhicule est inférieure à 1km/h environ. En effet, l'information de vitesse n'est généralement disponible qu'à partir d'une vitesse du véhicule de 0,6 km/h. En outre, cette information de vitesse est peu précise à basse vitesse du fait du principe même de l'acquisition de la vitesse véhicule. La précision est directement liée aux nombres de dents d'une cible disposée en regard du capteur et aux procédés gérant les mesures issues des quatre roues du véhicule. Ce défaut est particulièrement sensible pour les fonctions d'aide à la manoeuvre à basse vitesse.
L'information d'accélération longitudinale ainsi obtenue ne donne pas le sens de roulage car l'information de vitesse disponible est absolue.
Or cette information sur le sens de roulage est importante par exemple à basse vitesse, notamment lorsque le véhicule se met en mouvement sur une route significativement pentue, et peut donc se déplacer dans un sens opposé à celui attendu de part le rapport de boite de vitesse engagé (1^{ère} OU marche arrière)

L'invention a notamment pour but de pallier les inconvénients précités. A cet effet, l'invention a pour objet un procédé d'estimation de l'accélération longitudinale amélioré d'un véhicule, notamment d'un véhicule automobile. Le procédé comporte les étapes suivantes :
- une étape de calcul d'une information d'accélération du véhicule à partir d'une information de vitesse du véhicule ;
- une étape de filtrage et synchronisation délivrant une information d'accélération totale synchronisée, ladite information d'accélération totale synchronisée étant obtenue à partir d'une information de projection longitudinale de l'accélération totale comprenant l'accélération gravitationnelle, en compensant les décalages temporels de ladite information par rapport à l'information d'accélération du véhicule ;
- une étape délivrant une information de comparaison par comparaison de l'information d'accélération totale synchronisée et de l'information d'accélération du véhicule ;
- une étape délivrant une information d'accélération longitudinale du véhicule par comparaison de l'information de projection longitudinale de l'accélération totale comprenant l'accélération gravitationnelle avec l'information de comparaison.

Dans un mode de réalisation, l'information de projection longitudinale de l'accélération totale comprenant l'accélération gravitationnelle est générée par un capteur de type accéléromètre longitudinal compris dans le véhicule. L'information de projection longitudinale de l'accélération totale comprenant l'accélération gravitationnelle peut en outre être mise en forme en modifiant ladite information de telle sorte qu'au moins une partie des caractéristiques intrinsèques nominales du capteur de type accéléromètre longitudinal soit prise en compte. Lesdites caractéristiques intrinsèques nominales sont par exemple la sensibilité et le décalage nominal du capteur de type accéléromètre longitudinal.

L'invention a aussi pour objet un dispositif d'estimation de l'accélération longitudinale d'un véhicule automobile comportant un calculateur d'accélération longitudinale. Le calculateur d'accélération longitudinale reçoit en entrée :
- un premier signal comportant une information représentant la projection longitudinale de l'accélération totale (y compris l'accélération gravitationnelle) à laquelle le véhicule est soumis,
- un deuxième signal comportant une information représentant la vitesse du véhicule.
Le calculateur d'accélération longitudinale est adapté à la mise en oeuvre du procédé d'estimation de l'accélération longitudinale d'un véhicule selon l'invention. Le calculateur d'accélération longitudinale délivre en sortie un septième signal comprenant l'information représentant l'accélération longitudinale du véhicule.
Dans un mode de réalisation du dispositif, le septième signal est diffusé sur un bus de communication (le bus CAN) reliant les différents calculateurs embarqués dans le véhicule, le septième signal étant susceptible d'être utilisé par les calculateurs mettant en oeuvre les fonctions d'assistance au conducteur.

L'invention a notamment pour avantages qu'elle permet d'améliorer la dynamique de l'estimation de l'accélération longitudinale du véhicule; le gain pouvant dépasser 300 ms par rapport au procédé d'estimation de l'accélération longitudinale par dérivée de la vitesse du véhicule. En outre, l'invention ne souffre aucunement d'effets néfastes liés à la discrétisation du signal « vitesse », comme par exemple les problèmes numériques de dérivée d'un signal fortement discrétisé. Elle est par ailleurs insensible à la qualité de l'estimation de la pente de la route auquel est soumis le véhicule, ou encore à la dérive du décalage de l'accéléromètre. Elle permet encore d'être disponible et précise dès les basses vitesses et de prendre en compte le sens de roulage du véhicule.

D'autres caractéristiques et avantages de l'invention apparaîtront à l'aide de la description qui suit faite en regard des dessins annexés qui représentent :
- la figure 1a, par un synoptique, un procédé selon l'invention d'estimation de l'accélération longitudinale d'un véhicule automobile ;
- la figure 1b, par un schéma blocs, un dispositif selon l'invention d'estimation de l'accélération longitudinale d'un véhicule automobile ;
- les figures 2a et 2b, par des diagrammes, au cours du temps, des exemples de signaux comprenant les informations relatives aux différentes accélérations calculées par le procédé selon l'invention.
Les éléments identiques aux éléments déjà présentés sur les autres figures portent les mêmes références.

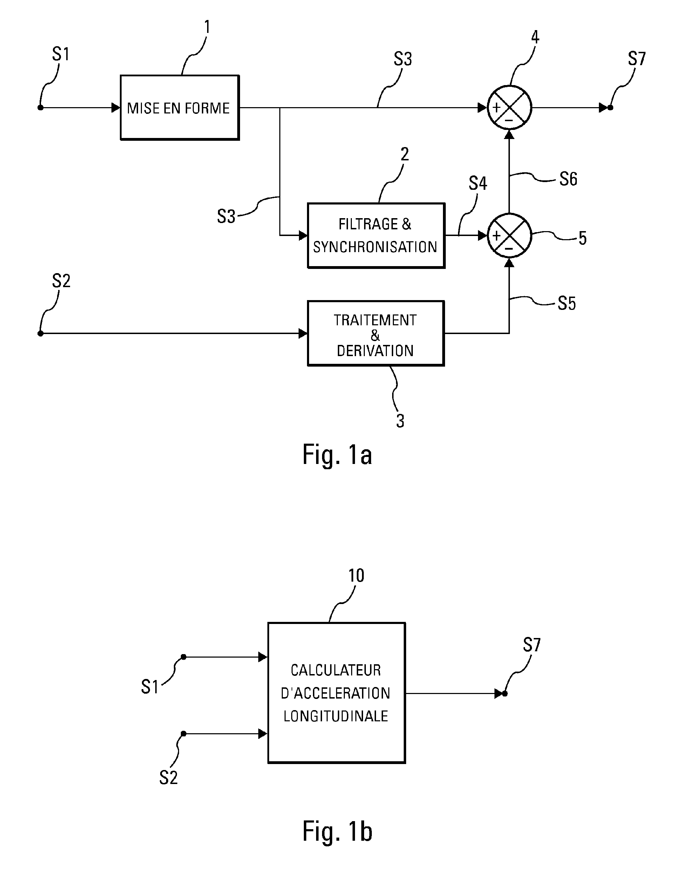

La figure 1a illustre par un synoptique un procédé selon l'invention d'estimation de l'accélération longitudinale d'un véhicule automobile. Le procédé reçoit en entrée un premier signal S1. Le premier signal S1 comporte une information représentant la projection longitudinale de l'accélération totale (y compris l'accélération gravitationnelle) à laquelle le véhicule est soumis. Le premier signal S1 est généré par un capteur de type accéléromètre longitudinal embarqué dans le véhicule. Le premier signal S1 peut être mis en forme dans une étape 1 du procédé selon l'invention. L'étape 1 de mise en forme a pour fonction de modifier le premier signal S1 pour prendre en compte au moins une partie des caractéristiques intrinsèques nominales du capteur de type accéléromètre longitudinal. A titre d'exemple non limitatif, ces caractéristiques intrinsèques nominales peuvent être, dans une plage de fonctionnement normale, la sensibilité du capteur, le décalage nominal (ou selon l'expression anglo-saxonne l' « offset »). Le procédé ne nécessite pas la connaissance à chaque instant du décalage effectif du capteur. En effet, un éventuel écart entre le décalage nominal et effectif, sera automatiquement compensé par le procédé selon l'invention. L'étape 1 délivre en sortie un troisième signal S3. Le troisième signal S3 correspond au premier signal S1 mis en forme. Le troisième signal S3 est appelé signal d'accélération totale.

Le procédé reçoit en entrée un deuxième signal S2. Le deuxième signal S2 comporte une information représentant la vitesse du véhicule. Le deuxième signal S2 peut être généré par le calculateur du système de freinage. Dans une étape 3, le deuxième signal S2 est traité et dérivé. L'étape 3 de traitement et dérivation a notamment pour fonction de calculer à partir du deuxième signal S2 un cinquième signal S5 comportant une information représentant l'accélération longitudinale du véhicule.

Le troisième signal S3 est reçu, filtré et synchronisé au cours d'une étape 2 du procédé selon l'invention. L'étape 2 de filtrage et de synchronisation a notamment pour fonction de calculer, à partir du troisième signal S3, un quatrième signal S4 comportant une information représentant l'accélération totale synchronisée. Le traitement de synchronisation mis en oeuvre au cours de l'étape 2 a pour objet la compensation des décalages temporels entre, d'une part, l'information comprise dans le troisième signal S3 et, d'autre part, l'information comprise dans le cinquième signal S5. L'information comprise dans le cinquième signal S5 est en retard par rapport à l'information comprise dans le troisième signal S3. Ce retard est notamment causé par le temps pris par les traitements compris dans l'étape 3 de calcul de l'accélération longitudinale à partir de l'information représentant la vitesse du véhicule compris dans le deuxième signal S2.

Dans une étape 5, l'information comprise dans le cinquième signal S5 est soustraite à l'information comprise dans le quatrième signal S4. L'étape 5 a pour objet le calcul d'un sixième signal S6 comprenant l'information représentant la composante longitudinale de l'accélération du véhicule due à la pesanteur.

Dans une étape 6, l'information comprise dans le sixième signal S6 est soustraite à l'information comprise dans le troisième signal S3. L'étape 6 a pour objet le calcul d'un septième signal S7 comprenant l'information représentant l'accélération longitudinale du véhicule.

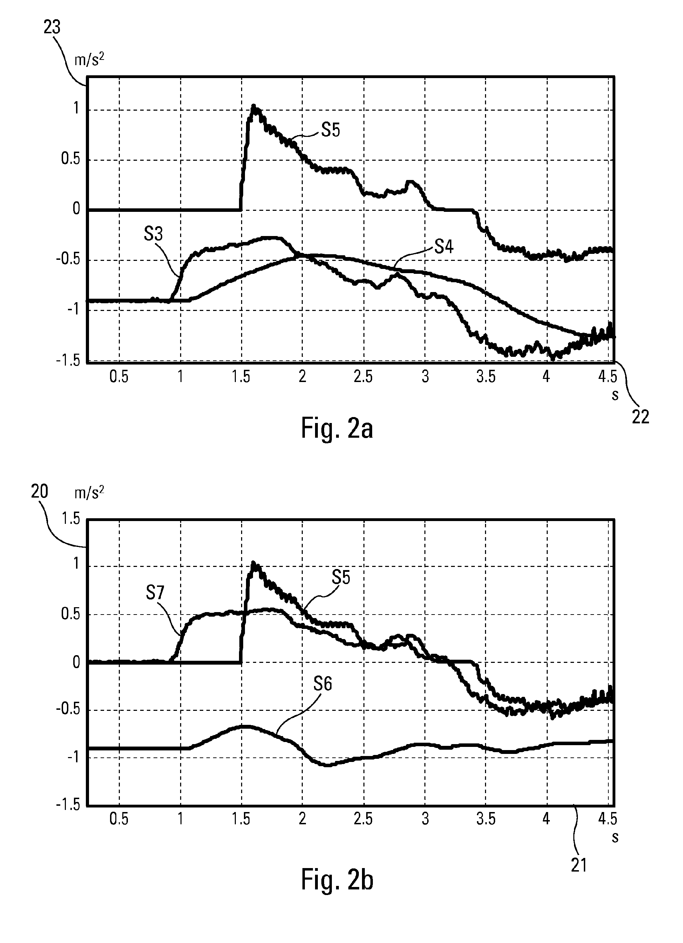

Les figures 2a et 2b représentent, par des diagrammes, au cours du temps, des exemples de signaux comprenant les informations relatives aux différentes accélérations calculées par le procédé selon l'invention.

Sur la figure 2a, le diagramme comporte un axe des abscisses 22 représentant le temps. Une unité en abscisse a une valeur de 1s. Le diagramme comporte encore un axe des ordonnées 23 représentant une accélération. Une unité en ordonnée a une valeur de 0,5 m.s⁻². L'évolution, au cours du temps, des informations comprises dans les quatrième et cinquième signaux S4 et S5 est représentée dans le présent diagramme. Les quatrième et cinquième signaux S4 et S5 représentés ont été obtenus par la mise en oeuvre du procédé selon l'invention, ledit procédé ayant reçu en entrée un exemple de premier signal S3 (représenté sur la figure 2a) et un exemple de deuxième signal S2 (non représenté).

Sur la figure 2b, le diagramme comporte un axe des abscisses 21 représentant le temps. Une unité en abscisse a une valeur de 0.5 s. Le diagramme comporte encore un axe des ordonnées 20 représentant une accélération. Une unité en ordonnée a une valeur de 0.5 m.s⁻². L'évolution, au cours du temps, des informations comprises dans les cinquième, sixième et septième signaux S5, S6 et S7 est représentée dans le présent diagramme. Les cinquième, sixième et septième signaux S5, S6 et S7 représentés ont été obtenus par la mise en oeuvre du procédé selon l'invention.

La figure 1b montre un dispositif selon l'invention d'estimation de l'accélération longitudinale d'un véhicule automobile. Le dispositif comporte un calculateur d'accélération longitudinale 10. Le calculateur d'accélération longitudinale 10 reçoit notamment en entrée le premier signal S1 comportant une information représentant la projection longitudinale de l'accélération totale (y compris l'accélération gravitationnelle) à laquelle le véhicule est soumis. Le premier signal S1 est généré par un capteur de type accéléromètre longitudinal compris dans le véhicule. Le calculateur d'accélération longitudinale 10 reçoit notamment en entrée le deuxième signal S2 comportant une information représentant la vitesse du véhicule. Le calculateur d'accélération longitudinale 10 est notamment adapté à la mise en oeuvre du procédé selon l'invention d'estimation de l'accélération longitudinale d'un véhicule automobile. Le calculateur d'accélération longitudinale 10 délivre en sortie le septième signal S7 comprenant l'information représentant l'accélération longitudinale du véhicule. Le septième signal S7 peut par exemple être diffusé sur un bus de communication reliant les différents calculateurs compris dans le véhicule. Ce bus de données peut être par exemple un bus de type Controller Area Network selon l'expression anglo-saxonne. Le septième signal S7 peut ainsi être utilisé par les calculateurs mettant en oeuvre les fonctions d'assistance au conducteur.

Le calculateur d'accélération longitudinale 10 selon l'invention peut par exemple être implémenté au sein d'un calculateur autonome ou encore dans un calculateur partagé par une ou plusieurs fonctions d'assistance au conducteur du véhicule. Le calculateur peut être programmé sur un composant électronique à logique programmable ou encore sur une carte à microprocesseur. Le calculateur peut aussi être réalisé à partir de composants électroniques.

## Revendications

1. Procédé d'estimation de l'accélération longitudinale d'un véhicule, notamment d'un véhicule automobile, **caractérisé en ce qu'**il comporte :
• une étape (3) de calcul d'une information d'accélération du véhicule (S5) à partir d'une information de vitesse du véhicule (S2) ;
• une étape (2) de filtrage et synchronisation délivrant une information d'accélération totale synchronisée (S4), ladite information d'accélération totale synchronisée (S4) étant obtenue à partir d'une information (S1) de projection longitudinale de l'accélération totale comprenant l'accélération gravitationnelle, en compensant les décalages temporels de ladite information (S4) par rapport à l'information d'accélération du véhicule (S5) ;
• une étape (5) délivrant une information de comparaison (S6) par comparaison de l'information d'accélération totale synchronisée (S4) et de l'information d'accélération du véhicule (S5) ;
• une étape (4) délivrant une information (S7) d'accélération longitudinale du véhicule par comparaison de l'information (S1) de projection longitudinale de l'accélération totale comprenant l'accélération gravitationnelle avec l'information de comparaison (S6).

2. Procédé selon la revendication 1 **caractérisé en ce que** l'information (S1) de projection longitudinale de l'accélération totale comprenant l'accélération gravitationnelle est générée par un capteur de type accéléromètre longitudinal compris dans le véhicule.

3. Procédé selon la revendication 2 **caractérisé en ce que** l'information (S1) de projection longitudinale de l'accélération totale comprenant l'accélération gravitationnelle est mise en forme (1) en modifiant ladite information (S1) de telle sorte qu'au moins une partie des caractéristiques intrinsèques nominales du capteur de type accéléromètre longitudinal soit prise en compte.

4. Procédé selon la revendication 3 **caractérisé en ce que** lesdites caractéristiques intrinsèques nominales sont la sensibilité et le décalage nominal du capteur de type accéléromètre longitudinal.

5. Dispositif d'estimation de l'accélération longitudinale d'un véhicule automobile **caractérisé en ce qu'**il comporte un calculateur d'accélération longitudinale (10), le calculateur d'accélération longitudinale (10) recevant en entrée :
• un premier signal (S1) comportant une information représentant la projection longitudinale de l'accélération totale (y compris l'accélération gravitationnelle) à laquelle le véhicule est soumis,
• un deuxième signal (S2) comportant une information représentant la vitesse du véhicule ;
le calculateur d'accélération longitudinale 10 étant adapté à la mise en oeuvre du procédé selon l'une quelconque des revendications 1 à 4, le calculateur d'accélération longitudinale (10) délivrant en sortie un septième signal (S7) comprenant l'information représentant l'accélération longitudinale du véhicule.

6. Dispositif selon la revendication 5 **caractérisé en ce que** le septième signal (S7) est diffusé sur un bus de communication reliant les différents calculateurs embarqués dans le véhicule, le septième signal (S7) étant susceptible d'être utilisé par les calculateurs mettant en oeuvre les fonctions d'assistance au conducteur.
